(19) Europäisches Patentamt
European Patent Office
Office européen des brevets

(11) **EP 1 642 175 B1**

(12) **EUROPEAN PATENT SPECIFICATION**

(45) Date of publication and mention
of the grant of the patent:
**25.12.2019 Bulletin 2019/52**

(51) Int Cl.:
***G04F 1/00*** *(2006.01)*      ***G01F 1/66*** *(2006.01)*

(21) Application number: **03817821.6**

(22) Date of filing: **03.07.2003**

(86) International application number:
**PCT/US2003/020835**

(87) International publication number:
**WO 2005/013015 (10.02.2005 Gazette 2005/06)**

(54) **PEAK SWITCH DETECTOR FOR TRANSIT TIME ULTRASONIC METERS**

SPITZENSCHALTDETEKTOR FÜR TRANSITZEIT-ULTRASCHALLMESSGERÄTE

DETECTEUR DE COMMUTATION DE VALEURS CRETES POUR COMPTEURS ULTRASONORES DE TEMPS DE PARCOURS

(84) Designated Contracting States:
**AT BE BG CH CY CZ DE DK EE ES FI FR GB GR HU IE IT LI LU MC NL PT RO SE SI SK TR**

(43) Date of publication of application:
**05.04.2006 Bulletin 2006/14**

(73) Proprietor: **DANIEL INDUSTRIES, INC., Houston, TX 77055 (US)**

(72) Inventors:
• **FREUND, William, R., Jr.**
  **Houston, TX 77083 (US)**
• **ZANKER, Klaus, Joachim**
  **Houston, TX 77079 (US)**
• **MURRAY, Gail, Paulin**
  **Tomball, TX 77375 (US)**

(74) Representative: **Roberts, Peter David et al**
  **Marks & Clerk LLP**
  **1 New York Street**
  **Manchester M1 4HD (GB)**

(56) References cited:
US-A- 4 028 938     US-A- 4 480 485
US-A- 4 930 358     US-A- 5 280 728
US-A1- 2002 062 690     US-B1- 6 494 105

**Description**

STATEMENT REGARDING FEDERALLY SPONSORED RESEARCH OR DEVELOPMENT

Not Applicable.

BACKGROUND OF THE INVENTION

Field of the Invention

A disclosed embodiment of the invention relates generally to the detection of errors in ultrasonic transit time measurements. Even more particularly, a disclosed embodiment of the invention relates to the identification of mistakes in peak selection for the ultrasonic waveforms.

Description of the Related Art

After a hydrocarbon such as natural gas has been removed from the ground, the gas stream is commonly transported from place to place via pipelines. As is appreciated by those of skill in the art, it is desirable to know with accuracy the amount of gas in the gas stream. Particular accuracy for gas flow measurements is demanded when gas (and any accompanying liquid) is changing hands, or "custody." Even where custody transfer is not taking place, however, measurement accuracy is desirable.

Gas flow meters have been developed to determine how much gas is flowing through the pipeline. An orifice meter is one established meter to measure the amount of gas flow. Certain drawbacks with this meter existed, however. More recently, another type of meter to measure gas flow was developed. This more recently developed meter is called an ultrasonic flow meter.

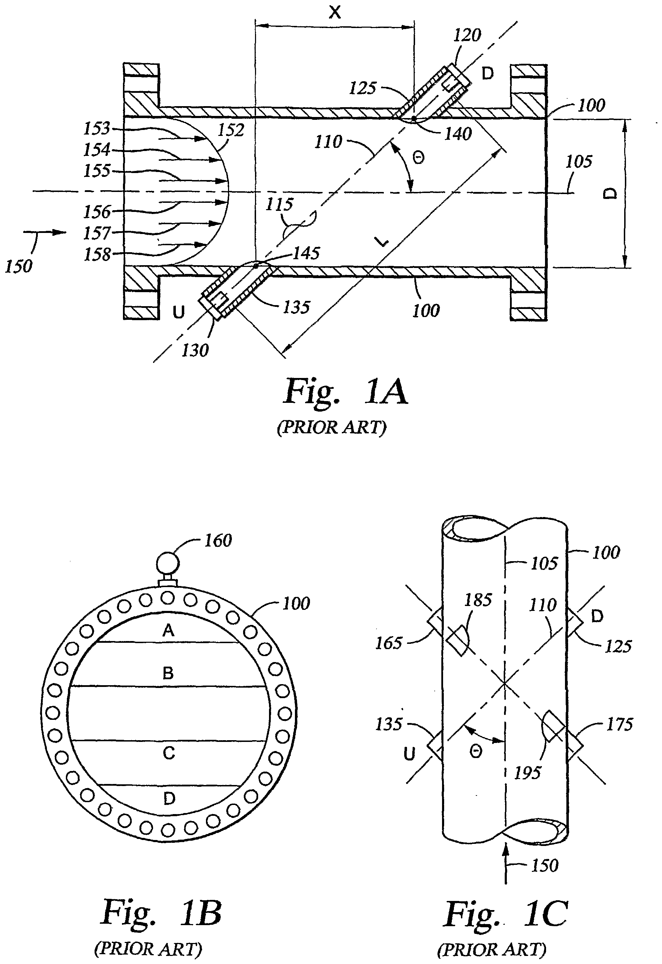

Figure 1A shows an ultrasonic meter suitable for measuring gas flow. Spoolpiece 100, suitable for placement between sections of gas pipeline, has a predetermined size and thus defines a measurement section. Alternately, a meter may be designed to attach to a pipeline section by, for example, hot tapping. As used herein, the term "pipeline" when used in reference to an ultrasonic meter may be referring also to the spoolpiece or other appropriate housing across which ultrasonic signals are being sent. A pair of transducers 120 and 130, and their respective housings 125 and 135, are located along the length of spoolpiece 100. A path 110, sometimes referred to as a "chord" exists between transducers 120 and 130 at an angle $\theta$ to a centerline 105. The position of transducers 120 and 130 may be defined by this angle, or may be defined by a first length L measured between transducers 120 and 130, a second length X corresponding to the axial distance between points 140 and 145, and a third length D corresponding to the pipe diameter. Distances D, X and L are precisely determined during meter fabrication. Points 140 and 145 define the locations where acoustic signals generated by transducers 120 and 130 enter and leave gas flowing through the spoolpiece 100 (*i.e.* the entrance to the spoolpiece bore). In most instances, meter transducers such as 120 and 130 are placed a specific distance from points 140 and 145, respectively, regardless of meter size (*i.e.* spoolpiece size). A fluid, typically natural gas, flows in a direction 150 with a velocity profile 152. Velocity vectors 153-158 indicate that the gas velocity through spool piece 100 increases as centerline 105 of spoolpiece 100 is approached.

Transducers 120 and 130 are ultrasonic transceivers, meaning that they both generate and receive ultrasonic signals. "Ultrasonic" in this context refers to frequencies above about 20 kilohertz. Typically, these signals are generated and received by a piezoelectric element in each transducer. To generate an ultrasonic signal, the piezoelectric element is stimulated electrically, and it responds by vibrating. This vibration of the piezoelectric element generates an ultrasonic signal that travels across the spoolpiece to the corresponding transducer of the transducer pair. Similarly, upon being struck by an ultrasonic signal, the receiving piezoelectric element vibrates and generates an electrical signal that is detected, digitized, and analyzed by electronics associated with the meter.

Initially, D ("downstream") transducer 120 generates an ultrasonic signal that is then received at, and detected by, U ("upstream") transducer 130. Some time later, U transducer 130 generates a return ultrasonic signal that is subsequently received at and detected by D transducer 120. Thus, U and D transducers 130 and 120 play "pitch and catch" with ultrasonic signals 115 along chordal path 110. During operation, this sequence may occur thousands of times per minute.

The transit time of the ultrasonic wave 115 between transducers U 130 and D 120 depends in part upon whether the ultrasonic signal 115 is traveling upstream or downstream with respect to the flowing gas. The transit time for an ultrasonic signal traveling downstream (*i.e.* in the same direction as the flow) is less than its transit time when traveling upstream (*i.e.* against the flow). In particular, the transit time $t_1$ of an ultrasonic signal traveling against the fluid flow and the transit time $t_2$ of an ultrasonic signal travelling with the fluid flow may be defined:

$$t_1 = \frac{L}{c - V\frac{x}{L}} \tag{1}$$

$$t_2 = \frac{L}{c + V\frac{x}{L}} \tag{2}$$

where,

c = speed of sound in the fluid flow;
V = average axial velocity of the fluid flow over the chordal path in the axial direction;
L = acoustic path length;
x = axial component of L within the meter bore;
$t_1$ = transmit time of the ultrasonic signal against the fluid flow; and
$t_2$ = transit time of the ultrasonic signal with the fluid flow.

The upstream and downstream transit times can be used to calculate the average velocity along the signal path by the equation:

$$V = \frac{L^2}{2x}\frac{t_1 - t_2}{t_1 t_2} \tag{3}$$

with the variables being defined as above.

The upstream and downstream travel times may also be used to calculate the speed of sound in the fluid flow according to the equation:

$$c = \frac{L}{2}\frac{t_1 + t_2}{t_1 t_2} \tag{4}$$

To a close approximation, equation (4) may be restated as:

$$V = \frac{c^2 \Delta t}{2x} \tag{5}$$

where,

$$\Delta t = t_1 - t_2 \tag{6}$$

So to a close approximation at low velocities, the velocity v is directly proportional to $\Delta t$.

Given the cross-section measurements of the meter carrying the gas, the average velocity over the area of the meter bore may be used to find the volume of gas flowing through the meter or pipeline 100.

In addition, ultrasonic gas flow meters can have one or more paths. Single-path meters typically include a pair of transducers that projects ultrasonic waves over a single path across the axis (*i.e.* center) of spoolpiece 100. In addition to the advantages provided by single-path ultrasonic meters, ultrasonic meters having more than one path have other advantages. These advantages make multi-path ultrasonic meters desirable for custody transfer applications where accuracy and reliability are crucial.

Referring now to Figure 1B, a multi-path ultrasonic meter is shown. Spool piece 100 includes four chordal paths A, B, C, and D at varying levels through the gas flow. Each chordal path A-D corresponds to two transceivers behaving alternately as a transmitter and receiver. Also shown is an electronics module 160, which acquires and processes the data from the four chordal paths A-D. This arrangement is described in U.S. Patent 4,646,575. Hidden from view in Figure 1B are the four pairs of transducers that correspond to chordal paths A-D.

The precise arrangement of the four pairs of transducers may be more easily understood by reference to Figure 1C. Four pairs of transducer ports are mounted on spool piece 100. Each of these pairs of transducer ports corresponds to a single chordal path of Figure 1B. A first pair of transducer ports 125 and 135 includes transducers 120 and 130 recessed slightly from the spool piece 100. The transducers are mounted at a non-perpendicular angle $\theta$ to centerline 105 of spool piece 100. Another pair of transducer ports 165 and 175 including associated transducers is mounted so that its chordal path loosely forms an "X" with respect to the chordal path of transducer ports 125 and 135. Similarly, transducer ports 185 and 195 are placed parallel to transducer ports 165 and 175 but at a different "level" (*i.e.* a different radial position in the pipe or meter spoolpiece). Not explicitly shown in Figure 1C is a fourth pair of transducers and transducer ports. Taking Figures 1B and 1C together, the pairs of transducers are arranged such that the upper two pairs of transducers corresponding to chords A and B form an X and the lower two pairs of transducers corresponding to chords C and D also form an X.

Referring now to Figure 1B, the flow velocity of the gas may be determined at each chord A-D to obtain chordal flow velocities. To obtain an average flow velocity over the entire pipe, the chordal flow velocities are multiplied by a set of predetermined constants. Such constants are well known and were determined theoretically.

Because the measurement of gas flow velocity and speed of sound depend on measured transit time, t, it is important to measure transit time accurately. One method and apparatus for measuring the time of flight of a signal is disclosed in U. S. Patent 5,983,730, issued November 16, 1999, entitled " Method and Apparatus for Measuring the Time of Flight of A Signal".

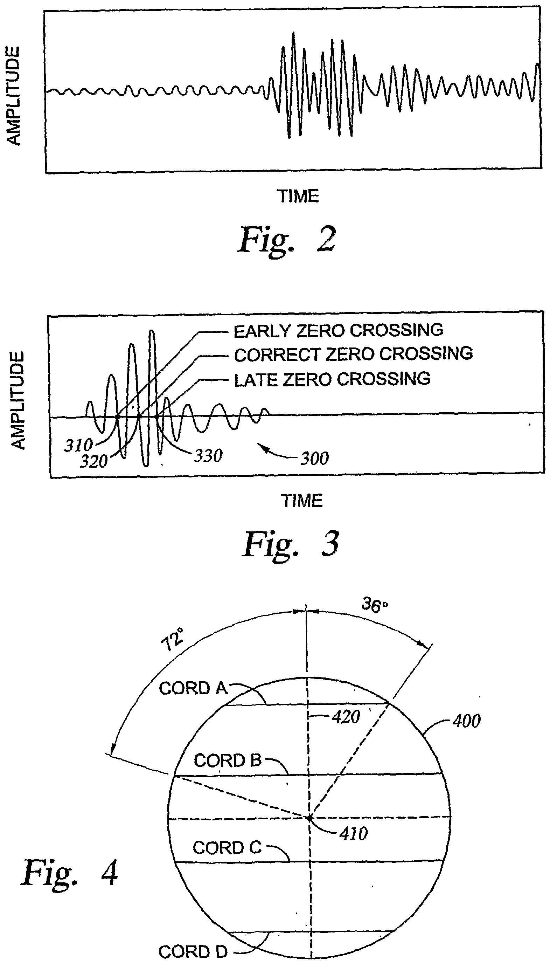

A difficulty that arises in measuring a time of flight exactly is defining when an ultrasonic waveform is received. For example, a detected waveform corresponding to a received ultrasonic signal may look like that shown in Figure 2. The precise instant this waveform is deemed to have arrived is not altogether clear. One method to define the arrival instant is to define it as a zero crossing that follows a predefined voltage threshold value for the waveform. However, signal degradation due to pressure fluctuations for example may cause the correct zero crossing to be misidentified, as shown in Figure 3 (not to scale). Other methods for identifying arrival time may also be used, but each is also subject to measurement error by misidentification of the proper arrival time.

US4028938 discloses an electroacoustical flow meter for measuring flow rates in open and closed channels including two sets of transducers, one set being positioned upstream relative to the other set. Flow rates are determined by computing the difference between upstream and downstream transit times of acoustical signals transmitted along various paths through the channel. A receiver in the flow meter monitors the acoustical signals received after each transmission. When an acoustical signal is received which has been attenuated due to disturbances such as obstructions along the signal path or interfering reflected signals, the receiver transmits a flag signal. This flag signal is utilized to minimize flow rate reading errors which normally result from such disturbances.

Regardless of the method of measuring arrival time, adaptive methods are known that modify the measurement criterion or criteria values during measurement of the ultrasonic signals. These methods were developed to be more accurate than other methods of measuring arrival time but nonetheless still suffer from misidentification of the ultrasonic signal arrival time, leading to measurement errors. Further, because of the adaptive nature of the identification method, the misidentification tends to be "locked in", where the detection algorithm tends to lock in the mistake so that it happens time after time after time.

Although the misidentification of the arrival time of ultrasonic signals has long been known, previous approaches to identifying peak switching errors are inadequate. For example, ultrasonic meters generally provide a speed of sound reading for the gas flow through the meters. This speed of sound calculation varies with error in the peak selection. However, the variation in the speed of sound measurement is small and may be difficult to identify directly.

In addition, the variation tends to get smaller as the meter size increases, making uniform diagnostics nearly impossible.

There therefore exists a need for a method or ultrasonic meter that eliminates misidentification of the arrival time of ultrasonic signals. Ideally, such a method or meter would be compatible with existing meters. It would also be ideal if such a method or meter were inexpensive to implement.

SUMMARY OF THE INVENTION

According to an aspect of the invention there is provided a method to detect a peak selection error in a waveform as set out in claim 1.

BRIEF DESCRIPTION OF THE DRAWINGS

For a more detailed description of the preferred embodiment of the present invention, reference will now be made to the accompanying drawings, wherein:

Figure 1A is a cut-away top view of an ultrasonic gas flow meter;
Figure 1B is an end view of a spoolpiece including chordal paths A-D;
Figure 1C is a top view of a spoolpiece housing transducer pairs;
Figure 2 is a first exemplary received ultrasonic waveform ;
Figure 3 is a second exemplary received ultrasonic waveform ;
Figure 4 is an end view of a four-chord ultrasonic meter showing angular relationships between chords;
Figure 5 is flow chart of one method according to the invention.

DETAILED DESCRIPTION OF THE PREFERRED EMBODIMENT

A first embodiment of the invention is a method and variants thereof for detecting time of arrival errors for ultrasonic signals. A second embodiment is electronics or hardware implementing such methods. For example, a processor or microprocessor associated with an ultrasonic meter as shown in Figure 1 might run a computer program embodying the disclosed method. Alternately, electronics might analyze data provided by an ultrasonic meter after the fact to determine whether an error was made in determining the measured time-of-flight.

For a chord A of known length LA, it is known that an ultrasonic wave traveling at the speed of sound "c" through a homogeneous medium at zero flow in the meter traverses the length of the chord $L_A$ in time $t_A$. $t_A$ may not be found, however, by simply averaging the upstream and downstream transit times. Instead, .the value of $t_A$ may be found algebraically by the equation:

$$t_A = \frac{L_A}{c} \qquad (7)$$

it follows that:

$$c = \frac{L_A}{t_A} \qquad (8)$$

This is just as true for a second chord B, such that:

$$c = \frac{L_B}{t_B} \qquad (9)$$

For various reasons, however, the measured gross transit time is not exactly the actual transit time of the signal. One reason, for example, that the two times differ is the delay time inherent in the electronics associated with each transducer.

If total measured time T is defined as:

$$T = t + \tau \qquad (10)$$

where,

T = measured or gross transit time;
t = actual transit time; and
$\tau$ = delay time.

Then where the delay times are the same for chords A and B, it is known from equation (8) that:

$$c = \frac{L_A}{T_A - \tau} \qquad (11)$$

It follows from knowledge that the speed of sound for the medium is the same at both chord "A" and chord "B" that:

$$L_A (T_B - \tau) = L_B (T_A - \tau) \tag{12}$$

and

$$\tau = \frac{L_B T_A - L_A T_B}{L_B - L_A} \tag{13}$$

$\Delta L$ is defined as:

$$\Delta L = L_B - L_A \tag{14}$$

and it follows that:

$$\tau = \frac{L_B T_A}{\Delta L} - \frac{L_A T_B}{\Delta L} \tag{15}$$

with the variables being defined as above.

Of course the transducer delay time for chord A, $\tau_A$, and the transducer delay time for chord B, $\tau_B$, are not the same. However, these delay times are routinely measured for each pair of transducers at the manufacturing stage before the transducers are sent into the field. Since $\tau_A$ and $\tau_B$ are known, it is also well known and common practice to calibrate each meter to factor out transducer delay times for each ultrasonic signal. Effectively, $\tau_A$ and $\tau_B$ are then equal to zero and therefore the same. However, if there is a peak switch, this effectively changes the delay time of the transducer pair. Since the measured transit time T is defined as the actual transit time, t, plus delay time, $\tau$, actual transit time can be substituted for measured transit time T where there is no peak selection error to result in:

$$\frac{L_B t_A}{\Delta L} - \frac{L_A t_B}{\Delta L} = 0 \tag{16}$$

This equation can then be used as a diagnostic to establish whether an error exists in the peak selection. It is equation 16 that has general applicability to a broad range of ultrasonic meters and signal arrival time identification methods.

A variable $\eta$, may then be established:

$$\eta = \frac{L_B t_A}{\Delta L} - \frac{L_A t_B}{\Delta L} \tag{17}$$

where,

$L_A$ = length of chord A;
$L_B$ = length of chord B;
$t_A$ = average transit time of ultrasonic signals traveling along chord A;
$t_B$ = average transit time of ultrasonic signals traveling along chord B; and
$\Delta L = L_B - L_A$.

If there is a misidentified peak, $\eta \neq 0$.

Let us examine the case where the "actual" peak in the received ultrasonic signal has been misidentified in chord A. Referring again to Figure 3, an example ultrasonic wave form 300 is shown (not to scale). The "true" arrival time 320 is a zero crossing on the waveform as the waveform goes from positive to negative polarity. Of course, a processor or the like may mistakenly identify either early zero crossing 310 or late zero crossing 330 (or some other zero crossing) as the true or actual arrival time of the waveform. If the ultrasonic meter is operating at 125 kHz, for example, the period of the waveform is 8 $\mu$sec (microseconds). Therefore, for this frequency, any peak selection error is on the order of 8 $\mu$sec. Obviously, a peak selection error for another frequency will have a different value, depending on the period of the waveform. In any event, for an error in $t_A$,

$$\eta = \frac{L_B}{\Delta L}(t_A + t_e) - \frac{L_A t_B}{\Delta L} \qquad (18)$$

where,

$\eta$ = error indicator
$L_A$, $L_B$ = lengths of chords A, B;
$t_A$, $t_B$ = average transit times across chords A, B at zero flow;
$\Delta L$ = difference in the lengths of chords A and B; and
$t_e$ = error in transit time.

This is equivalent to:

$$\eta = \frac{L_B t_A}{\Delta L} - \frac{L_A t_B}{\Delta L} + \frac{L_B}{\Delta L}t_e \qquad (19)$$

From equation (16), it is known that

$$\frac{L_B t_A}{\Delta L} - \frac{L_A t_B}{\Delta L} = 0$$

such that

$$\eta = \frac{L_B}{\Delta L}t_e \qquad (20)$$

Based on the value of $\eta$, it can be inferred whether there has been misidentification of the arrival time. These equations may be adapted to any particular meter. For example, referring to Figure 4, there is shown a schematic end-view of an ultrasonic meter. The meter housing 400 includes chord A, chord B, chord C, and chord D. A central or longitudinal axis is represented at the center of the housing by a center point 410. A vertical axis 420 intersects center point 410. A line drawn from the center point at an angle of 36° from the vertical axis 420 intersects both chord A and the meter housing 400. A line drawn from the center point 410 at an angle of 72° from the vertical axis 420 intersects both chord B and the meter housing 400. Assuming an ideal meter that has the transducer with no setback from bore, according to this:

$$L_B = \sqrt{2}\,D\sin(72); \text{ and} \qquad (21)$$

$$L_A = \sqrt{2}\,D\sin(36)$$

where,

$L_A$ = length of chord A;
$L_B$ = length of chord B; and
D = meter diameter

Therefore:

$$\frac{L_B}{L_A} = 1.618034 \qquad (22)$$

$\dfrac{L_A}{\Delta L}$ may be expressed as $L_A/(L_B-L_A)$.

Multiplying by $\dfrac{1/L_A}{1/L_A}$ results in $\dfrac{1}{(L_B/L_A-1)}$. Substituting 1.618034 for $L_B/L_A$ results in:

$$\frac{L_A}{\Delta L}=1.618 \qquad\qquad (23)$$

Similarly, $\dfrac{L_B}{\Delta L}$ may be expressed as $L_B/(L_B-L_A)$.

Multiplying by $\dfrac{1/L_A}{1/L_A}$ results in $\dfrac{L_B/L_A}{(L_B/L_A-1)}$

Substituting 1.618 for $L_B/L_A$ results in:

$$\frac{L_B}{\Delta L}=2.618 \qquad\qquad (24)$$

Obviously, where there is a different angular (or bounce path) relationship between or among the chords, the value of these ratios will differ.

Assuming no effect from any recess of the transducers from the perfect circle of the theoretical meter, the above values for $L_A/\Delta L$ and $L_B/\Delta L$ are independent of meter size. This assumption is largely accurate, with the ratios $L_A/\Delta L$ and $L_B/\Delta L$ varying with meter size due to recess of the transducers back from the spoolpiece-housing. This variation is greater the smaller the meter.

Because $\tau$ was defined as zero above as being calibrated or factored out from the meter, and because $L_B/\Delta L$ is equal to 2.618 as shown above with respect to equation (20), the equation simplifies to:

$$\eta=2.618t_e \qquad\qquad (25)$$

If the misidentified peak is one zero crossing away from the "true" zero crossing (the most common occurrence), the value for $\eta$ is plus or minus 21 $\mu$sec, depending on whether misidentified zero crossing is earlier in time than the true zero crossing (in which case the value for $\eta$ is negative) or is later in time than the true or correct zero crossing (in which case the value for $\eta$ is positive). More generally,

$$\eta=2.618E_A - 1.618E_B \qquad\qquad (26)$$

where,

$E_A$ = the error in $t_A$; and
$E_B$ = the error in $t_B$.
If $E_B$ = 0 and $E_A$ = +/-8$\mu$s, then $\eta$ = +/-21$\mu$s;
If $E_A$ = 0 and $E_B$ = +/-8$\mu$s, then $\eta$ = +/-13$\mu$s;
If $E_B$ = $E_A$ = +/-8$\mu$s, then $\eta$ = +/-8$\mu$s.

With normal manufacturing tolerances, the errors $E_B$ and $E_A$ are on the order of +/-1$\mu$s, which implies an $\eta$ of about +/- 3$\mu$s. So long as the error from manufacturing tolerances, multiplied by the maximum $L/\Delta L$ value (e.g. 2.618) is less than one period of the ultrasonic waveform, any error measurement less than some predetermined value can be discarded as mere manufacturing tolerance. For example, the predetermined value may be any value less than one period such as in this case 4$\mu$sec. Thus the $\eta$ test can separate peak switching errors from manufacturing tolerances.

The above derivation is based on an assumption of zero flow through the meter. Of course, in a real-world application, the assumption of a homogeneous medium is not necessarily true at very low velocities, due to stratification and convection. At high flow rates, turbulence and pressure surges disturb the homogeneity of the medium. Consequently, use of these exact equations may present challenges that would best be avoided. The preferred embodiment implements the underlying theory of this method by use of the measured speed of sound, c.

It is preferred that $t_A$ be based on the average of a batch of upstream and downstream measurements for chord A. Similarly, $t_B$ should be based on the average of a batch of upstream and downstream transit time measurements for chord B. However, we already know from equation (7) that $t_A = L_A/c_A$ and $t_B = L_B/c_B$. It follows that:

$$\eta = \frac{L_B L_A (c_B - c_A)}{\Delta L c_A c_B} \qquad (27)$$

where,

$\eta$ = error indicator

$L_A$, $L_B$ = lengths of chords A and B;

$c_A$, $c_B$ = values for speed of sound measured by chords A and B; and

$\Delta L$ = difference in the lengths of chords A and B.

This calculation presents an additional advantage. Of course, ultimately this computation is based on the same variables as the earlier equations. But because a standard ultrasonic meter such as that sold by the assignee already calculates speed of sound for each chord, a value for $\eta$ may be easily computed based on already known or computed information.

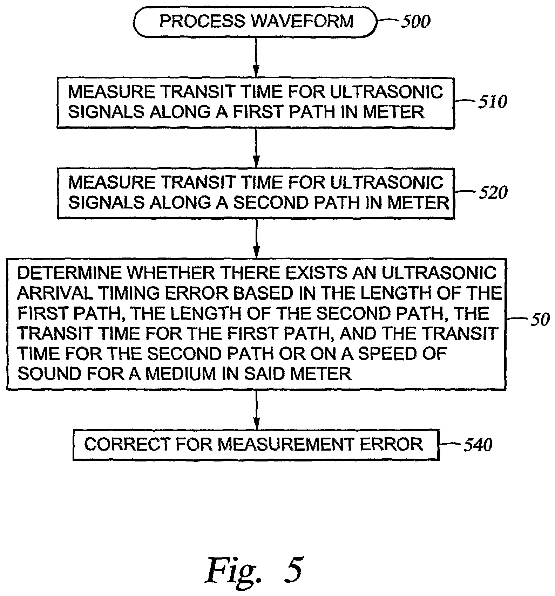

Figure 5 is a flow chart of a method according to one embodiment of the invention. A method to detect a peak selection error in a waveform includes preprocessing of the wave form (*e.g.* filtering and digitizing the waveform) at step 500, measuring a first average transit time for one or more ultrasonic signals along a first path in a meter at step 510, measuring a second average transit time for one or more ultrasonic signals along a second path in the meter at step 520, where the first and second paths are of different lengths, and determining whether there exists a peak selection error based on the length of the first path, the length of the second path, the first average transit time, and the second average transit time at step 530. Additional steps may also be added. For example, at step 540 the measurement error may be corrected for by knowledge of the magnitude and direction or polarity of the error either by correction after the fact or by "on the fly" correction. If the value of $\eta$ is positive, the error occurs in the later in time direction. If the value of $\eta$ is negative, the error occurs in the earlier in time direction.

In a four-chord meter, this $\eta$ comparison test can also be made between chords A and C, D and C, and D and B because each of these pairs of chords is comprised of different-length chords. The four values of $\eta$ can then be used to pinpoint and correct the peak switching error.

Another application is to check that the time-of-flight measurement is correct. For example, the check on time of flight measurement may be used where a zero crossing method of measuring the arrival time of an ultrasonic signal is not used.

It should be noted that the invention is applicable not only to a four-chord ultrasonic meter as shown above but also to other meter designs including bounce-path ultrasonic meters (so long as those meters have at least two chords of differing lengths). The use of nomenclature such as $L_A$ and $L_B$ should not be construed to limit the invention to a particular set of chords. The invention may be used with any chords in an ultrasonic meter. It should also be noted that the invention is not limited to zero-crossing points, and could also be applied to peak selection points or any other points on the waveform where the picking errors are relatively constant. The invention can also be used to verify accurate time measurement within some tolerance regardless of the method of measuring time of arrival (although the indication may be weaker or stronger than with zero crossing methods).

While preferred embodiments of this invention have been shown and described, modifications thereof can be made by one skilled in the art. The embodiments described herein are exemplary only and are not limiting. For example, the invention applies equally well to digitized signals as analog signals. Many variations and modifications of the system and apparatus are possible and are within the scope of the invention. For example, the invention applies to any ultrasonic data originating from two or more chords having differing lengths and is not limited to the disclosed four chord meter. Accordingly, the scope of protection is not limited to the embodiments described herein, but is only limited by the claims which follow.

**Claims**

1. A method to detect a peak selection error in a waveform, comprising:

   a) measuring a first average transit time for one or more ultrasonic signals along a first path in a pipeline;
   b) measuring a second average transit time for one or more ultrasonic signals along a second path in said pipeline; wherein said second path is of different length than said first path; the method further comprising:
   c) determining whether there exists a peak selection error based on the length of said first path, the length of said second path, said first average transit time, said second average transit time and the difference between the length of said first path and the length of said second path, **characterized in that** when a peak selection error occurs a variable $\eta$ has a non-zero value, $\eta$ being based upon the equation:

$$\eta = \frac{L_B t_A}{\Delta L} - \frac{L_A t_B}{\Delta L}$$

   where,

   $L_A$ = length of chord A
   $L_B$ = length of chord B;
   $t_A$ = average transit time of ultrasonic signals traveling along chord A at zero flow ;
   $t_B$ = average transit time of ultrasonic signals traveling along chord B at zero flow; and

$$\Delta L = L_B\text{-}L_A.$$

2. The method of claim 1, further comprising:
   d) computing the size and direction of said peak selection error.

3. The method of claim 1, further comprising:

   d) computing the size and direction of said peak selection error;
   e) correcting for said peak selection error.

4. The method of claim 1, wherein said predetermined value is less than one period of the ultrasonic signal.

5. The method of claim 1, wherein said length of said first path, the length of said second path, said first average transit time, and said second average transit time are used to calculate first and second speeds of sound for a medium in said pipeline, said step of determining whether a peak selection error exists being determined from said first and second speed of sound calculations.

6. The method of claim 1, wherein the direction of said error is indicated by whether $\eta$ is positive or negative.

7. A method to detect a peak selection error in a waveform, comprising:

   a) measuring a first average transit time for one or more ultrasonic signals along a first path in a pipeline;
   b) measuring a second average transit time for one or more ultrasonic signals along a second path in said pipeline; wherein said second path is of different length than said first path; the method further comprising:
   c) determining whether there exists a peak selection error based on the length of said first path, the length of said second path, said first average transit time, said second average transit time and the difference between the length of said first path and the length of said second path, **characterized in that** when a peak selection error occurs a variable $\eta$ has a non-zero value, $\eta$ being based upon the equation:

$$\eta = \frac{L_B L_A (c_B - c_A)}{\Delta L c_A c_B}$$

   where,

$\eta$ = error indicator
$L_A$, $L_B$ = lengths of chords A and B;
$c_A$, $c_B$ - values for speed of sound measured by chords A and B;

$$\Delta L = L_B - L_A;$$

$t_A = \dfrac{L_A}{c_A} =$ the first average transit time; and,

$t_B = \dfrac{L_B}{c_B} =$ the second average transit time.

8. The method of claim 7, further comprising:
   d) computing the size and direction of said peak selection error.

9. The method of claim 7, further comprising:

   d) computing the size and direction of said peak selection error;
   e) correcting for said peak selection error.

10. The method of claim 7, wherein said predetermined value is less than the duration of one period for the ultrasonic signals.

11. The method of claim 7, wherein said length of said first path, the length of said second path, said first average transit time, and said second average transit time are used to calculate first and second speeds of sound for a medium in said pipeline, said step of determining whether a peak selection error exists being determined from said first and second speed of sound calculations.

12. The method of claim 7, wherein the direction of said error is indicated by whether $\eta$ is positive or negative.

13. An ultrasonic metering system, comprising:

    a first transducer pair defining a first ultrasonic path having a first path length;
    a second transducer pair defining a second ultrasonic path having a second path length;
    wherein said second path is of different length than said first path;
    **characterized in that** said system further comprises one or more processors associated with said first and second transducer pairs, said one or more processors suitable to determine a first average transit time measurement for ultrasonic signals across said first ultrasonic path and a second average transit time measurement for ultrasonic signals across said second ultrasonic path, wherein said processor is programmed to identify simultaneously measurement errors in said first and second transit time measurements according to the peak selection error detection method of any of claims 1 to 12.

14. The ultrasonic metering system of claim 13, wherein said first and second ultrasonic paths reside in part in an ultrasonic meter installed on a pipeline.

15. The ultrasonic metering system of claim 13, wherein said predetermined value is less than a single period of said ultrasonic signals divided by $L/\Delta L$ where $L$ is the length of a chord and $\Delta L$ is the difference in lengths of two chords of interest.

16. The ultrasonic metering system of claim 13, wherein said processor computes said measurement errors based on a speed of sound computation and wherein said measurement error is corrected for.


**Patentansprüche**

1. Verfahren, um einen Spitzenwertauswahlfehler in einer Wellenform zu ermitteln, umfassend:

   a) Messen einer ersten durchschnittlichen Laufzeit für ein oder mehrere Ultraschallsignale entlang einem ersten Weg in einer Rohrleitung;

b) Messen einer zweiten durchschnittlichen Laufzeit für ein oder mehrere Ultraschallsignale entlang einem zweiten Weg in der Rohrleitung;

worin der zweite Weg von anderer Länge ist als der erste Weg; wobei das Verfahren ferner umfasst:

c) Bestimmen, ob ein Spitzenwertauswahlfehler vorliegt, und zwar auf der Grundlage der Länge des ersten Weges, der Länge des zweiten Weges, der ersten durchschnittlichen Laufzeit, der zweiten durchschnittlichen Laufzeit und der Differenz zwischen der Länge des ersten Weges und der Länge des zweiten Weges, **dadurch gekennzeichnet, dass**, wenn ein Spitzenwertauswahlfehler auftritt, eine Variable $\eta$ einen Wert ungleich null aufweist, wobei $\eta$ auf folgender Gleichung basiert:

$$\eta = \frac{L_B t_A}{\Delta L} - \frac{L_A t_B}{\Delta L}$$

wobei:

$L_A$ = Länge der Sehne A;

$L_B$ = Länge der Sehne B;

$t_A$ = durchschnittliche Laufzeit von Ultraschallsignalen, die bei Nulldurchfluss entlang der Sehne A laufen;

$t_B$ = durchschnittliche Laufzeit von Ultraschallsignalen, die bei Nulldurchfluss entlang der Sehne B laufen; und

$$\Delta L = L_B - L_A.$$

2. Verfahren nach Anspruch 1, ferner umfassend:

d) Berechnen der Größe und Richtung des Spitzenwertauswahlfehlers.

3. Verfahren nach Anspruch 1, ferner umfassend:

d) Berechnen der Größe und Richtung des Spitzenwertauswahlfehlers;

e) Korrigieren des Spitzenwertauswahlfehlers.

4. Verfahren nach Anspruch 1, worin der vorbestimmte Wert kleiner als eine Periode des Ultraschallsignals ist.

5. Verfahren nach Anspruch 1, worin die Länge des ersten Weges, die Länge des zweiten Weges, die erste mittlere Laufzeit und die zweite mittlere Laufzeit verwendet werden, um erste und zweite Schallgeschwindigkeiten für ein Medium in der Rohrleitung zu berechnen, wobei der Schritt des Bestimmens, ob ein Spitzenwertauswahlfehler vorliegt, aus den Berechnungen der ersten und zweiten Schallgeschwindigkeiten bestimmt wird.

6. Verfahren nach Anspruch 1, worin die Richtung des Fehlers dadurch angezeigt wird, ob $\eta$ positiv oder negativ ist.

7. Verfahren, um einen Spitzenwertauswahlfehler in einer Wellenform zu ermitteln, umfassend:

a) Messen einer ersten durchschnittlichen Laufzeit für ein oder mehrere Ultraschallsignale entlang einem ersten Weg in einer Rohrleitung;

b) Messen einer zweiten durchschnittlichen Laufzeit für ein oder mehrere Ultraschallsignale entlang einem zweiten Weg in der Rohrleitung;

worin der zweite Weg von anderer Länge ist als der erste Weg; wobei das Verfahren ferner umfasst:

c) Bestimmen, ob ein Spitzenwertauswahlfehler vorliegt, und zwar auf der Grundlage der Länge des ersten Weges, der Länge des zweiten Weges, der ersten durchschnittlichen Laufzeit, der zweiten durchschnittlichen Laufzeit und der Differenz zwischen der Länge des ersten Weges und der Länge des zweiten Weges, **dadurch gekennzeichnet, dass**, wenn ein Spitzenwertauswahlfehler auftritt, eine Variable $\eta$ einen Wert ungleich null aufweist, wobei $\eta$ auf folgender Gleichung basiert:

$$\eta = \frac{L_B L_A (c_B - c_A)}{\Delta L c_A c_B}$$

wobei,

$\eta$ = Fehlerindikator;
$L_A$, $L_B$ = Längen der Sehnen A und B;
$c_A$, $c_B$ = Werte für die Schallgeschwindigkeit, gemessen über die Sehnen A und B;

$$\Delta L = L_B - L_A;$$

$t_A = \frac{L_A}{c_A} =$ die erste durchschnittliche Laufzeit; und

$t_B = \frac{L_B}{c_B} =$ die zweite durchschnittliche Laufzeit.

8. Verfahren nach Anspruch 7, ferner umfassend:
d) Berechnen der Größe und Richtung des Spitzenwertauswahlfehlers.

9. Verfahren nach Anspruch 7, ferner umfassend:

d) Berechnen der Größe und Richtung des Spitzenwertauswahlfehlers;
e) Korrigieren des Spitzenwertauswahlfehlers.

10. Verfahren nach Anspruch 7, worin der vorbestimmte Wert kleiner als eine Periode der Ultraschallsignale ist.

11. Verfahren nach Anspruch 7, worin die Länge des ersten Weges, die Länge des zweiten Weges, die erste mittlere Laufzeit und die zweite mittlere Laufzeit verwendet werden, um erste und zweite Schallgeschwindigkeiten für ein Medium in der Rohrleitung zu berechnen, wobei der Schritt des Bestimmens, ob ein Spitzenwertauswahlfehler vorliegt, aus den Berechnungen der ersten und zweiten Schallgeschwindigkeiten bestimmt wird.

12. Verfahren nach Anspruch 7, worin die Richtung des Fehlers dadurch angezeigt wird, ob $\eta$ positiv oder negativ ist.

13. Ultraschall-Zählwerterfassungssystem, umfassend:

ein erstes Wandlerpaar, das einen ersten Ultraschallweg mit einer ersten Weglänge definiert;
ein zweites Wandlerpaar, das einen zweiten Ultraschallweg mit einer zweiten Weglänge definiert;
worin der zweite Weg von anderer Länge als der erste Weg ist; **dadurch gekennzeichnet, dass** das System ferner einen oder mehrere Prozessoren umfasst, die den ersten und zweiten Wandlerpaaren zugeordnet sind, wobei der eine oder die mehreren Prozessoren geeignet sind, eine erste Messung der durchschnittlichen Laufzeit für Ultraschallsignale über den ersten Ultraschallweg und eine zweite Messung der durchschnittlichen Laufzeit für Ultraschallsignale über den zweiten Ultraschallweg zu bestimmen, wobei der Prozessor dafür programmiert ist, gleichzeitig Messfehler in den ersten und zweiten Laufzeitmessungen gemäß dem Spitzenwertauswahlfehler-Ermittlungsverfahren nach einem der Ansprüche 1 bis 12 zu identifizieren.

14. Ultraschall-Zählwerterfassungssystem nach Anspruch 13, worin die ersten und zweiten Ultraschallwege sich teilweise in einem Ultraschallmesszähler befinden, der an einer Rohrleitung installiert ist.

15. Ultraschall-Zählwerterfassungssystem nach Anspruch 13, worin der vorbestimmte Wert kleiner als eine einzelne Periode der Ultraschallsignale geteilt durch $L/\Delta L$ ist, wobei $L$ die Länge einer Sehne und $\Delta L$ die Differenz der Längen von zwei in Betracht kommenden Sehnen ist.

16. Ultraschall-Zählwerterfassungssystem nach Anspruch 13, worin der Prozessor die Messfehler auf der Grundlage einer Berechnung der Schallgeschwindigkeit berechnet und worin der Messfehler kompensiert wird.

**Revendications**

1. Procédé de détection d'une erreur de sélection de valeur de crête dans une forme d'onde, comprenant les étapes ci-dessous consistant à :

   a) mesurer un premier temps de parcours moyen pour un ou plusieurs signaux ultrasonores le long d'un premier trajet dans un pipeline ;
   b) mesurer un second temps de parcours moyen pour un ou plusieurs signaux ultrasonores le long d'un second trajet dans ledit pipeline ;
   dans lequel la longueur dudit second trajet est différente de celle dudit premier trajet ; le procédé comprenant en outre l'étape ci-dessous consistant à :
   c) déterminer s'il existe une erreur de sélection de valeur de crête sur la base de la longueur dudit premier trajet, de la longueur dudit second trajet, dudit premier temps de parcours moyen, dudit second temps de parcours moyen, et de la différence entre la longueur dudit premier trajet et la longueur dudit second trajet, **caractérisé en ce que**, lorsqu'une erreur de sélection de valeur de crête se produit, une variable $\eta$ présente une valeur non nulle, la variable $\eta$ étant basée sur l'équation ci-dessous :

$$\eta = \frac{L_B t_A}{\Delta L} - \frac{L_A t_B}{\Delta L}$$

   où,

   $L_A$ = longueur de la corde A ;
   $L_B$ = longueur de la corde B ;
   $t_A$ = temps de parcours moyen de signaux ultrasonores se déplaçant le long de la corde A à un débit nul ;
   $t_B$ = temps de parcours moyen de signaux ultrasonores se déplaçant le long de la corde B à un débit nul ; et

$$\Delta L = L_B - L_A.$$

2. Procédé selon la revendication 1, comprenant en outre l'étape ci-dessous consistant à :
   d) calculer la taille et la direction de ladite erreur de sélection de valeur de crête.

3. Procédé selon la revendication 1, comprenant en outre les étapes ci-dessous consistant à :

   d) calculer la taille et la direction de ladite erreur de sélection de valeur de crête ; et
   e) corriger ladite erreur de sélection de valeur de crête.

4. Procédé selon la revendication 1, dans lequel ladite valeur prédéterminée est inférieure à une période du signal ultrasonore.

5. Procédé selon la revendication 1, dans lequel ladite longueur dudit premier trajet, la longueur dudit second trajet, ledit premier temps de parcours moyen et ledit second temps de parcours moyen sont utilisés pour calculer des première et seconde vitesses du son pour un milieu dans ledit pipeline, dans lequel ladite étape consistant à déterminer si une erreur de sélection de valeur de crête existe est déterminée à partir desdits premier et second calculs de vitesse du son.

6. Procédé selon la revendication 1, dans lequel la direction de ladite erreur est indiquée par la valeur positive ou négative de la variable $\eta$.

7. Procédé de détection d'une erreur de sélection de valeur de crête dans une forme d'onde, comprenant les étapes ci-dessous consistant à :

   a) mesurer un premier temps de parcours moyen pour un ou plusieurs signaux ultrasonores le long d'un premier trajet dans un pipeline ;
   b) mesurer un second temps de parcours moyen pour un ou plusieurs signaux ultrasonores le long d'un second trajet dans ledit pipeline ;

dans lequel la longueur dudit second trajet est différente de celle dudit premier trajet ; le procédé comprenant en outre l'étape ci-dessous consistant à :

c) déterminer s'il existe une erreur de sélection de valeur de crête sur la base de la longueur dudit premier trajet, de la longueur dudit second trajet, dudit premier temps de parcours moyen, dudit second temps de parcours moyen, et de la différence entre la longueur dudit premier trajet et la longueur dudit second trajet, **caractérisé en ce que**, lorsqu'une erreur de sélection de valeur de crête se produit, une variable $\eta$ présente une valeur non nulle, la variable $\eta$ étant basée sur l'équation ci-dessous :

$$\eta = \frac{L_B L_A (c_B - c_A)}{\Delta L c_A c_B}$$

où,

$\eta$ = indicateur d'erreur

$L_A$, $L_B$ = longueurs des cordes A et B ;

$c_A$, $c_B$ = valeurs pour la vitesse du son mesurée par les cordes A et B ;

$$\Delta L = L_B - L_A;$$

$t_A = \frac{L_A}{c_A} = $ le premier temps de parcours moyen ; et

$t_B = \frac{L_B}{c_B} = $ le premier temps de parcours moyen.

8. Procédé selon la revendication 7, comprenant en outre l'étape ci-dessous consistant à :
d) calculer la taille et la direction de ladite erreur de sélection de valeur de crête.

9. Procédé selon la revendication 7, comprenant en outre les étapes ci-dessous consistant à :

d) calculer la taille et la direction de ladite erreur de sélection de valeur de crête ;
e) corriger ladite erreur de sélection de valeur de crête.

10. Procédé selon la revendication 7, dans lequel ladite valeur prédéterminée est inférieure à la durée d'une période pour les signaux ultrasonores.

11. Procédé selon la revendication 7, dans lequel ladite longueur dudit premier trajet, la longueur dudit second trajet, ledit premier temps de parcours moyen et ledit second temps de parcours moyen sont utilisés pour calculer des première et seconde vitesses du son pour un milieu dans ledit pipeline, dans lequel ladite étape consistant à déterminer si une erreur de sélection de valeur de crête existe est déterminée à partir desdits premier et second calculs de vitesse du son.

12. Procédé selon la revendication 7, dans lequel la direction de ladite erreur est indiquée par la valeur positive ou négative de la variable $\eta$.

13. Système de comptage ultrasonore, comprenant :

une première paire de transducteurs définissant un premier trajet ultrasonore présentant une première longueur de trajet ;
une seconde paire de transducteurs définissant un second trajet ultrasonore présentant une seconde longueur de trajet ;
dans lequel la longueur dudit second trajet est différente de celle dudit premier trajet ;
**caractérisé en ce que** ledit système comprend en outre un ou plusieurs processeurs associés auxdites première et seconde paires de transducteurs, ledit un ou lesdits plusieurs processeurs étant pertinents pour déterminer une première mesure de temps de parcours moyen pour des signaux ultrasonores à travers ledit premier trajet ultrasonore et une seconde mesure de temps de parcours moyen pour des signaux ultrasonores à travers ledit second trajet ultrasonore, dans lequel ledit processeur est programmé pour identifier simultanément des erreurs de mesure dans lesdites première et seconde mesures de temps de parcours, conformément au procédé de détection d'erreur de sélection de valeur de crête selon l'une quelconque des revendications 1 à 12.

14. Système de comptage ultrasonore selon la revendication 13, dans lequel lesdits premier et second trajets ultrasonores résident en partie dans un compteur ultrasonore installé sur un pipeline.

15. Système de comptage ultrasonore selon la revendication 13, dans lequel ladite valeur prédéterminée est inférieure à une période unique desdits signaux ultrasonores divisée par $L/\Delta L$, où $L$ est la longueur d'une corde et $\Delta L$ est la différence, en termes de longueurs, de deux cordes d'intérêt.

16. Système de comptage ultrasonore selon la revendication 13, dans lequel ledit processeur calcule lesdites erreurs de mesure sur la base d'un calcul de vitesse du son, et dans lequel ladite erreur de mesure est corrigée.

**Fig. 1A**
*(PRIOR ART)*

**Fig. 1B**
*(PRIOR ART)*

**Fig. 1C**
*(PRIOR ART)*

Fig. 2

Fig. 3

Fig. 4

PROCESS WAVEFORM — 500

MEASURE TRANSIT TIME FOR ULTRASONIC
SIGNALS ALONG A FIRST PATH IN METER — 510

MEASURE TRANSIT TIME FOR ULTRASONIC
SIGNALS ALONG A SECOND PATH IN METER — 520

DETERMINE WHETHER THERE EXISTS AN ULTRASONIC
ARRIVAL TIMING ERROR BASED IN THE LENGTH OF THE
FIRST PATH, THE LENGTH OF THE SECOND PATH, THE
TRANSIT TIME FOR THE FIRST PATH, AND THE TRANSIT
TIME FOR THE SECOND PATH OR ON A SPEED OF
SOUND FOR A MEDIUM IN SAID METER — 50

CORRECT FOR MEASUREMENT ERROR — 540

*Fig. 5*

**EP 1 642 175 B1**

## REFERENCES CITED IN THE DESCRIPTION

**Patent documents cited in the description**

- US 4646575 A
- US 5983730 A

- US 4028938 A